# EUROPÄISCHE PATENTSCHRIFT

(11) **EP 0 678 248 B1**
(45) Veröffentlichungstag und Bekanntmachung des Hinweises auf die Patenterteilung: **24.03.1999**
(21) Anmeldenummer: 95106017.7
(22) Anmeldetag: 21.04.1995
(51) Int. Cl.: A41H 3/00

(54) **Verfahren und Vorrichtung zur Bearbeitung von Schneidegut**
Method and apparatus to prepare material to be cut
Procédé et dispositif pour la préparation de matériaux à couper

(30) Priorität: 23.04.1994 DE 4414212; 18.04.1995 DE 19514363
(43) Veröffentlichungstag der Anmeldung: 25.10.1995
(73) Patentinhaber: Stahl, Anton, Dipl. Betr. Wirt., D-83075 Bad Feilnbach Au (DE)
(72) Erfinder: Stahl, Anton, Dipl. Betr. Wirt., D-83075 Bad Feilnbach Au (DE)

(56) Entgegenhaltungen:
- DE-A- 4 012 462
- FR-A- 2 506 782
- FR-A- 2 564 708
- GB-A- 2 188 170

## Beschreibung

Die Erfindung betrifft ein Verfahren und eine Vorrichtung zur Optimierung der Bearbeitung von Schneidegut (6), wie z.B. Textilien, Leder, technischen Geweben usw. insbesondere zur Verschachtelung von Schnittmustern (T1,T2) vor dem automatischen Schneidevorgang unter Berücksichtigung evtl. Fehlerstellen (F1,F2) usw. auf der Oberfläche eines gegebenenfalls auch besonders großflächigen Schneidegutes, wobei die Schnittmuster als Konturen des Schneidegutes nach Erstellung in einem CAD-System oder dergl. in einem Rechenwerk (1) gespeichert und von dort abrufbar sind, mittels einer Steuereinrichtung (5) auf dem Schneidegut positionierbar und deren endgültige Positionierung der Schneideeinrichtung (C) durch einen elektrischen Befehl übermittelt wird.

So ist beispielsweise jede Lederhaut, aus der Formen zur Erstellung von Echtlederprodukten (Schuhe, Taschen, Polstermöbel, Bekleidung etc.) geschnitten werden, ein Einzelstück mit qualitativ unterschiedlichen Zonen, Fehlern, Knoten und Farbabweichungen. Ähnliches gilt für Textilien etc. insbesondere dann, wenn sie Muster aufweisen.

Die Schnittmuster werden dabei bisher meistens in Form von Stanzeisen oder Schablonen händisch so auf der Lederhaut oder dergl. plaziert, daß, unter Berücksichtigung aller Materialeigenschaften (Fehler, Farbabweichungen, Verdickungen, etc.), die höchst-mögliche Materialausnutzung gewährleistet wird. Anschließend werden die Formen entweder mit einem Ziehmesser von Hand ausgeschnitten oder bei der Verwendung von Stanzeisen ausgestanzt, automatische Schneideeinrichtungen, wie insbesondere sogen. Cutter können bei einem solchen Arbeitsverfahren nicht eingesetzt werden.

Für die Durchführung dieser Vorbereitungsarbeiten ist, um die notwendige Qualität und Materialoptimierung zu erzielen, ein erfahrener Lederzuschneider Voraussetzung. Ein Großteil des Arbeitsaufwandes und der erforderlichen Zeit wird dabei von schwerer handwerklicher Tätigkeit in Anspruch genommen. So ist u.a. das Plazieren der Schablonen und Stanzeisen, Stanzen, Schneiden mit Ziehmesser sehr arbeitsaufwendig und wenig effektiv. Der Einsatz von Stanzeisen ist aber nur dann sinnvoll, wenn lange Modellzyklen einen möglichst langen Einsatz der gleichen Stanzeisen ermöglichen, da diese außerdem sehr teuer sind. Der hohe wirtschaftliche Aufwand dafür von etwa DM 250 000,-- und mehr pro Jahr für Herstellung und Pflege solcher Werkzeuge rechtfertigt deren Einsatz jedoch nicht bei kurzen Modellzyklen. Darüberhinaus ist die Handhabung der Stanzeisen zeit- und vor allem auch kraftintensiv. Arbeitsausfälle und Gesundheits- beeinträchtigungen des Personals sind zusätzliche Begleiterscheinungen des Hantierens mit derartigen Werkzeugen.

Aus der EP 01 65 890 geht ein Verfahren und eine Vorrichtung zur wechselwirkenden Anordnung von Schnittmustern auf einer Unterlage für das Zeichnen und/oder das Zuschneiden hervor, bei dem in einem Arbeitsspeicher die Koordinaten diverser zuzuschneidender Schablonen usw. gespeichert sind und auf einem Monitor angezeigt werden, von dem sie direkt mittels einer Videoprojektionseinrichtung auf das zuzuschneidende Schneidegut, das auf einer Unterlage aufliegt, projiziert werden. Diese Schablonen können über die Videoprojektionseinrichtung über eine mit dem Rechner verbundene Steuereinrichtung auf dem Monitor bewegt werden bis deren endgültige Lage erreicht ist, was dann auf dem Monitor angezeigt wird. Ist die Verschachtelung der Konturen fertig, wird der Schneidevorgang ausgelöst.

Ein solches Verfahren ist ausschließlich für kleine Schablonen, also kleine Muster geeignet, da deren Größe durch die Abmessungen des Bildschirms des Monitors begrenzt wird. Eine Vergrößerung ist nicht möglich, weil die Zeilenauflösung des Videoprojektors zusätzlich zu Unschärfen führt. Somit sind die Konturen der Schnittmuster auf der Lederhaut oder dergl. nicht mehr zu erkennen.

Ein ähnliches Verfahren und eine Vorrichtung zur Optimierung des Materialzuschnitts wurde auch mit der DE-PS 36 27 110 offenbart, das sich ebenfalls eines Rechners und eines Monitors zur Anzeige der zu schneidenden Konturen bedient, wobei die zu schneidenden Konturen dort entsprechend den Fehlerstellen des zu schneidenden Gutes positioniert und von einer lichtstarken elektronischen Projektionsvorrichtung, im Vergleich zum Monitorbild, auf Originalgröße vergrößert auf das Schneidegut projiziert werden und, nach dem Positionieren, die Gesamtfläche des erreichbaren Zuschnittes berechnet und ins Verhältnis zur Fläche des zu schneidenden Gutes gesetzt wird. Der automatische Zuschnitt erfolgt dann erst bei Erreichen eines bestimmten Ausnutzungsgrades.

Auch dieser Lösungsvorschlag zur Optimierung des Materialzuschnittes ist mit verschiedenen Nachteilen behaftet. So wird auch hierbei eine Videoprojektion von einem Monitorbild vorgenommen, wobei anstelle eines lichtstarken elektronischen Projektors ein Laserscanner-System eingesetzt werden könnte, das jedoch auch diverse Nachteile, wie die nur geringe Ablenkgeschwindigkeit des mechanischen Scannersystems mit ihren Folgen usw. besitzt. Schließlich muß das Bedienungspersonal auch hierbei zwischen Monitor und Arbeitsfläche hin und her wechseln und die Verschachtelung der Schnittmuster am Bildschirm vornehmen, d.h. Form und Beschaffenheit der Lederhaut oder dergl. müßte im Monitor vollständig sichtbar sein, was aber nicht vollkommen zu realisieren ist. Außerdem sind bei einem solchen Verfahren feste Toleranzgrenzen gegeben, die nicht überschritten werden können. Auch ist ein sehr hoher Apparateaufwand erforderlich.

Die FR-Patentanmeldung Nr. 2 506 782 offenbart ein Verfahren zum Herausschneiden von Lederteilen, insbesondere Schuhteilen, aus einer Haut mittels eines energiereichen Laserstrahles, jedoch kein Nestingverfahren. Zur Durchführung des Verfahrens wird ebenfalls ein Rechner eingesetzt in dessen Speicher die codifizierten Umrisse der zu schneidenden Schuhteile sowie Fehlerstellen der Haut gespeichert sind, die dann aus der Haut mit Hilfe des Laserstrahles geschnitten werden. Eine verkleinerte oder vergrößerte Darstellung der Muster und/oder Fehlerstellen kann dabei am Monitor stattfinden. Sie dient dazu die zu schneidenden Teile unterschiedlichen Größen, z.B. Schuhgröße 37 auf Größe 39, 40 etc. und umgekehrt anpassen zu können.

Diese Tätigkeiten können jedoch derzeit noch wesentlich besser und effektiver vom Menschen gelöst werden, da es bisher nicht gelungen ist, bei gleichzeitiger Teileprojektion auf die Lederhaut oder dergl. deren Qualität zu beurteilen, was aber unerläßlich ist. Keines der bekannten Systeme ermöglicht die direkte Arbeit des Bedienungspersonals am Schneidegut.

Hier setzt die Erfindung ein.

Der Erfindung, wie sie in den Ansprüchen beschrieben ist, liegt die Aufgabe zugrunde, ein Verfahren zur Leder-, Gewebe-, wie Textil- sowie technischer Gewebe bearbeitung und eine Vorrichtung zur Durchführung des Verfahrens zu besitzen, mit deren Hilfe insbesondere der lederverarbeitenden Industrie Hilfsmittel an die Hand gegeben werden, die es ermöglichen Stanzeisen und Druckluftpressen einzusparen, sowie eventuelle Schneideprozesse per Hand durch einen automatischen Zuschnitt zu ersetzen.

Die mit der Erfindung erzielten Vorteile liegen insbesondere in einer erhöhten Produktivität des einzelnen Lederbearbeiters, da sich dieser auf seine wesentlichen Aufgaben, nämlich das Plazierung der Formen unter Qualitätsgesichtspunkten bei optimaler Materialausnutzung auf dem Schneidegut, konzentrieren kann. Die stark gesundheitsbelastenden Arbeitsgänge werden durch den Einsatz des erfindungsgemäßen Verfahrens vermieden. Es werden außerdem keine Videoeinrichtungen, Monitore und aufwendige Projektionseinrichtungen dafür mehr benötigt. Das Hin- und Herwechseln des Bedienungspersonals vom Monitorarbeitsplatz zur Arbeitsfläche mit dem auf- liegenden Schneidegut entfällt.

Ein weiterer Vorteil ist in der direkten persönlichen Einflußnahme und Inaugenscheinnahme durch das Bedienungspersonal zu sehen, anstatt die Beurteilung und Verschachtelung am Monitor vornehmen zu müßen. Der Bediener hat während des gesamten Arbeitsablaufes unmittelbaren Kontakt zum zu bearbeitenden Material, woraus folgt, daß z.B. Fehlerstellentoleranzen usw. während der Inaugenscheinnahme noch verändert werden können. Somit braucht eine vorherige Erfassung und Speicherung der Fehlerstellen der Lederoberfläche oder dergl. nicht vorgenommen zu werden, da dieser Vorgang vom Bediener zeitgleich mit der Verschachtelung und Plazierung der Schnittmuster auf dem Schneidegut durchgeführt wird, was u.a. eine wesentliche Materialersparnis bedeutet. Es kann weiterhin eine Darstellung aller Schnittmuster, die zu verschachteln sind bzw. wurden, durchgeführt werden. Es ist auch ein wesentlicher Vorteil, daß wegen der Laserdarstellung auf der Arbeitsfläche, eine genaue Ausleuchtung der Lederhaut oder dergl. erfolgt, sodaß sämtliche Fehlerstellen und auch Farbunterschiede vom Bediener sofort erkannt und berücksichtigt werden können. Das zu schneidende Gut bleibt auf der Arbeitsfläche während der gesamten Bearbeitungszeit liegen und wird sofort zugeschnitten, es sei denn, eine Zwischenlagerung des Schneidegutes ist beabsichtigt. Schließlich ist eine Darstellung unterschiedlicher Schnittmuster gem. ihrer Bedeutung, Qualität, Gruppenzugehörigkeit etc. durch den Laser in verschiedenen auswählbaren Farben möglich. Es kann mit dem erfindungsgemäßen Verfahren sogar, im Gegensatz zu den bekannten Verfahren, bei Tageslicht gearbeitet werden. Eine Darstellung der Schnittmuster in verkleinertem Maßstab ist zusätzlich zeitgleich mit deren Darstellung in Originalgröße auf einem Steuerfeld an, bzw. auf der Arbeitsfläche möglich.

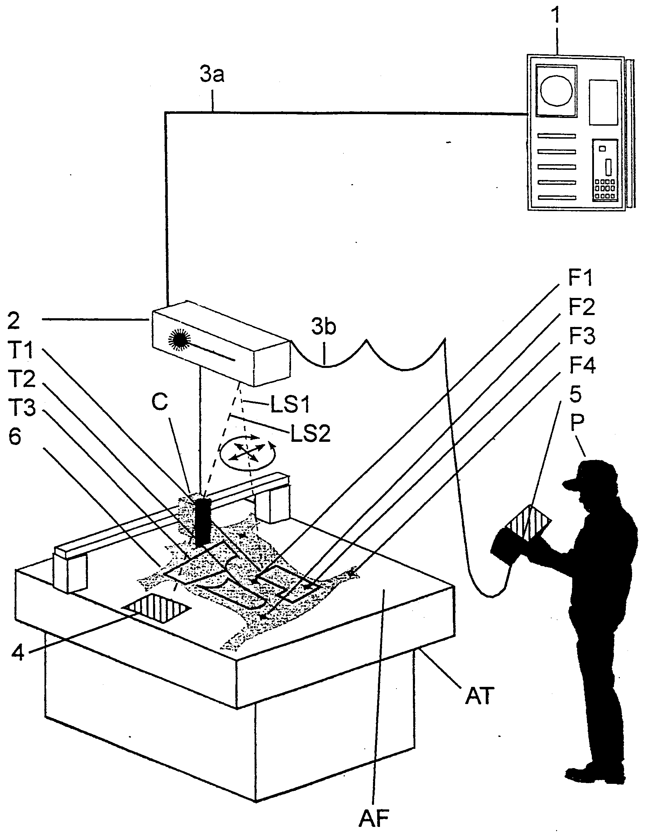

Die Erfindung ist nachstehend anhand eines in der Abbildung dargestellten Ausführungsbeispieles näher erläutert.

Die mit der Erfindung vorgeschlagene Vorrichtung zur Durchführung eines Verfahrens zur Materialbearbeitung besteht im wesentlichen aus einem Rechner 1 mit der zugehörigen Tastatur usw. beispielsweise eines PC, ferner einem Schneidetisch AT mit einer Arbeitsfläche AF für das aufliegende Schneidegut 6 und einer zugeordneten Laserstrahleinrichtung 2, die für die Emmitierung vorzugsweise mehrerer Laserstrahlen L1 und L2 für die Darstellung einer Vorlage in unterschiedlichen Maßstäben und ggfl. auch Farben eingerichtet ist, sowie zugehörigen Datenkabeln 3a zur Lasereinrichtung 2 und 3b zum Handsteuergerät 5 für das Bedienungspersonal P. Auf dem Schneidetisch AT, bzw. auf oder an dessen Arbeitsfläche AF ist eine Steuerfläche 4 für die verkleinerte Laserdarstellung L2 der zu schneidenden Schnittmuster, Auflistung und Abrufung der Schnittmuster T1,T2,T3, zugeordneter Codes etc. aus dem Rechnerspeicher vorgesehen. Ein Hand-Steuergerät 5 für den Bediener P zur Steuerung der Lasereinrichtung 2 und notwendige Steuerleitungen 3b für die Lasereinrichtung 2 z.B. einem Datenkabel, drahtlose Übermittlungsstrecke etc., bzw. zur Auslösung der Schneidevorrichtung C ist zusätzlich vorgesehen.

Die Durchführung des erfindungsgemäßen Verfahrens läuft wie folgt ab:

Die Konturen der auszuschneidenden Schnittmuster T1,T2,T3 sind auf der Steuerfläche 4 an der Arbeitsfläche AF des Arbeitstisches AT beispielsweise in verkleinertem Maßstab durch Laserstrahlung L2 sichtbar gemacht, während deren endgültige Plazierung, unter Berücksichtigung der evtl. Fehlerstellen F1,F2,F3,F4, Toleranzen usw. mittels der Laserdarstellung L1 der Schnittmuster in Originalgröße auf der Oberfläche der Lederhaut 5, d.h. direkt im Originalmaßstab am Arbeitstisch 3 vom Bediener mittels seiner Hand-Lasersteuerungseinheit vorgenommen wird. Die Bewegungsrichtungen der Lasereinrichtung 2 und damit der Laserstrahlen L1,L2 sind durch Pfeile angedeutet und sämtlich vom Bediener P über sein Hand-Lasersteuergerät 5 steuerbar. Die Selektion der zu schneidenden Schnittmuster T1,T2,T3 usw., beispielsweise eines Auftrages, bestimmter Qualitätsstufen, Prioritäten usw. erfolgt dabei aus dem Speicher des Rechners 1 über das Steuerfeld 4 durch den Bediener P beispielsweise über die verkleinerte Darstellung der Schnittmuster durch den Laserstrahl L2, nicht dargestellte Tastenfelder, in einem Display angezeigte Listen oder dergl., während die weitere Auswahl der Schnittmuster z.B. T1,T3 aus der Selektion und deren Plazierung auf Schneidegut 6 z.B. einer Lederhaut 5 auch durch das Hand-Lasersteuergerät 5 des Bedieners erfolgt. Nachdem die Plazierung und Verschachtelung der Schnittmuster T1,T2,T3 unter Berücksichtigung der Fehlerstellen z.B. F1,F2,F3,F4 und ggfl. das Setzen von Markierungen abgeschlossen ist, wird der Schneidevorgang des Cutters C durch den Bediener am Hand-Lasersteuergerät 5 ausgelöst, wodurch die Vorrichtung für die Durchführung eines weiteren Verfahrens zur Verfügung steht. Das Schneidegut wird dabei vom Beginn des Verfahrens bis zum Abschluß desselben durch den Schneidevorgang nicht bewegt.

Die Selektion der Schnittmuster T1,T2,T3, usw. geschieht dabei beispielsweise nach Aufträgen und zusätzlicher Sortierung nach vorgegebenen Qualitätskriterien, wobei Umgruppierungen, Zusammenfassung verschiedener Aufträge usw. jederzeit möglich sind. Dabei ist das wichtigste Auswahlkriterium das Zusammenpassen der einzelnen zuzuschneidenden Schnittmuster.

Zur einfacheren Unterscheidung unterschiedlicher Aufträge, Gruppen, Qualitätszonen innerhalb eines Teiles usw. können verschiedene Farben der Laserstrahlen L1,L2 eingesetzt werden.

Die Vorrichtung zur Durchführung des Verfahrens besteht aus einem Rechner 1 mit seinem Speicherwerk, einem Arbeitstisch AT mit dem darauf befindlichen Schneidegut 5, mindestens einer Tastatur 2, einer Schneidevorrichtung C und den erforderlichen elektrischen Verbindungen 4a,8,9. Der Rechner 1 ist zum Datenaustausch mit der beweglichen Laserstrahleinrichtung 2, dem Steuerfeld 4 an der Arbeitsfläche AF des Arbeitstisches AT und dem bedienerseitigem Steuergerät 5 sowie der Schneidevorrichtung C elektrisch verbunden ist, wobei die Lasereinrichtung 2 sowohl eine Darstellung der zu schneidenden Konturen der Schnittmuster T1,T2 in Originalgröße durch den emittierten Laserstrahl LS1 auf dem Schneidegut 6 als auch, falls gewünscht, in verkleinerter Darstellung durch den zusätzlich emittierten Laserstrahl LS2 auf dem Steuerfeld 4 vornimmt.

Das Steuerfeld 4 kann beispielsweise tragbar ausgebildet oder am Arbeitstisch AT montiert sein und ist mit der Laserstrahleinrichtung 2 und dem Rechner 1 auf geeignete Weise elektrisch verbunden. Die Verbindungen 3a,3b zwischen den einzelnen Komponenten der Vorrichtung können aus elektrischen Kabeln, Glasfaserkabeln, opto-elektronischen und/oder Funkstrecken bestehen.

Selbstverständlich ist der Erfindungsgegenstand nicht auf das beschriebene Beispiel einer Lederbearbeitung beschränkt. Es kann z.B. auch anderes Schneidegut, wie z.B. Textilien, vor allem solche mit großflächigen Mustern, bearbeitet werden. Die Datenübertragung kann z.B. drahtlos, opto-elektronisch, per Funkstrecke etc. erfolgen. Ebenso kann die Auslösung des Schneidevorganges von anderen Orten, außer dem Hand-Lasersteuergerät 5 des Bedieners, ausgelöst werden; so z.B. am Cutter C selbst, über das Steuerfeld 4 oder anderen geeigneten Schaltstellen. Anstelle der Konturen können beispielsweise auch die Flächen der Schnittmuster durch Laserstrahlen dargestellt werden oder Schraffuren, Kurven, Hilfslinien, Codes usw., auch in unterschiedlichen Farben. Dies dient sowohl der einfacheren Auswahl als auch für Markierungen usw. Mit diesen Schraffuren, Codes usw. können die Flächen der Schnittmuster auch ausgefüllt und/oder beschriftet oder markiert werden.

### STÜCKLISTE

- 1: Rechner
- 2: Lasergerät
- 3a: Datenkabel
- 3b: Datenkabel
- 4: Steuerfeld
- 5: Handsteuergerät
- 6: Schneidegut
- AF: Arbeitsfläche
- AT: Arbeitstisch
- F1-4: Fehlerstellen
- P: Bediener
- LS1: Laserstrahl für Darstellung in Originalmaßstab
- LS2: Laserstrahl für Darstellung in verkleinertem Maßstab
- T1-3: Schnittmuster

## Patentansprüche

1. Verfahren zur Optimierung der Bearbeitung von Schneidegut (6), wie Textilien, Leder, technischen Geweben oder dergl. insbesondere zur Verschachtelung von Schnittmustern (T1,T2) vor dem automatischen Schneidevorgang unter Berücksichtigung evtl. Fehlerstellen (F1,F2) usw. auf der Oberfläche des, ggfl. auch besonders großflächigen, Schneidegutes, wobei die Schnittmuster als Konturen nach Erstellung in einem CAD-System oder dergl. in einem Rechenwerk (1) gespeichert und von dort abrufbar sind, mittels einer Steuereinrichtung (5) auf dem Schneidegut positionierbar und deren endgültige Positionierung der Schneideeinrichtung (C) durch einen elektrischen Befehl übermittelt wird, **gekennzeichnet durch folgende Verfahrensschritte:**
i. Selektion von Schnittmustern aus dem Speicher des Rechenwerkes über ein von einem an der Arbeitsfläche befindlichen Bediener betätigbares Steuergerät,
ii. Darstellung der Konturen der selektierten Schnittmuster unmittelbar mittels mindestens eines Laserstrahles auf mindestens einer beliebigen Stelle und in beliebiger Größe auf einer Arbeitsfläche mit nachfolgender Auswahl bestimmter Konturen von Teilen aus den selektierten Schnittmustern und optimaler Verschachtelung derselben direkt am und auf dem Schneidegut durch den Bediener durch Plazierung der Schnittmuster mittels Laserdarstellung derselben in Originalgröße und, nach erfolgter Optimierung der Plazierung der Konturen und Markierungen auf dem Schneidegut, Zusammenstellung eines Schneideauftrages in Originalgröße an die Schneidevorrichtung und
iii. Auslösung des Schneidevorganges durch bedienerseitiges Steuergerät,
wobei sämtliche Bearbeitungsvorgänge am Schneidegut direkt durch den Bediener vorgenommen werden und das Schneidegut bis zum Abschluß des Schneidevorganges nicht bewegt wird.

2. Verfahren nach Anspruch 1, **dadurch gekennzeichnet,** daß die Vornahme der Laserdarstellung der Konturen der Schnittmuster außer in Originalgröße auf dem Schneidegut in auch in verkleinerter Größe auf einem Steuerfeld der Arbeitsfläche vorgenommen wird.

3. Verfahren nach Anspruch 1 und 2, **dadurch gekennzeichnet,** daß die unterschiedliche Laserdarstellungen gleichzeitig vorgenommen werden.

4. Verfahren nach Anspruch 1 bis 3, **dadurch gekennzeichnet,** daß man die Konturen unterschiedlicher Schnittmuster oder Schnittmustergruppen in unterschiedlichen Farben darstellt.

5. Vorrichtung zur Durchführung des Verfahrens nach Anspruch 1 bis 4, bestehend aus einem Rechner (1) mit seinem Speicherwerk, einem Arbeitstisch (AT) mit dem darauf befindlichen Schneidegut (5) , mindestens einer Tastatur (2), einer Schneidevorrichtung (C) und den erforderlichen elektrischen Verbindungen (4a,8,9) **dadurch gekennzeichnet,** daß der Rechner (1) zum Datenaustausch mit einer beweglichen Laserstrahleinrichtung (2), einem Steuerfeld (4) an der Arbeitsfläche (AF) des Arbeitstisches (AT) und einem bedienerseitigem Steuergerät (5) sowie der Schneidevorrichtung (C) elektrisch verbunden ist, wobei die Lasereinrichtung (2) sowohl eine Darstellung der zu schneidenden Konturen der Schnittmuster (T1,T2) in Originalgröße durch den emittierten Laserstrahl (LS1) auf dem Schneidegut (6) als auch in verkleinerter Darstellung durch den zusätzlich emittierten Laserstrahl (LS2) auf dem Steuerfeld (4) vornimmt.

6. Vorrichtung nach Anspruch 5, **dadurch gekennzeichnet,** daß das Steuerfeld (4) sich an dem Arbeitstisch (AT) befindet und mit der Laserstrahleinrichtung (2) und dem Rechner (1) elektrisch verbunden ist.

7. Vorrichtung nach Anspruch 5 und 6, **dadurch gekennzeichnet,** daß ein tragbares Steuergerät (5) vorgesehen ist, das mit der Laserstrahleinrichtung (2) und dem Rechner (1) elektrisch verbunden ist.

8. Vorrichtung nach Anspruch 5 bis 7, **dadurch gekennzeichnet,** daß die Verbindungen (3a,3b) zwischen den einzelnen Komponenten der Vorrichtung aus elektrischen Kabeln, Glasfaserkabeln, opto-elektronischen und/oder Funkstrecken bestehen.

## Claims

1. Method for optimizing the processing of goods to be cut (6), such as textiles, leather, industrial fabrics or similar, in particular the layout of patterns (T1, T2) prior to the automatic cutting operation taking into account possible flaws (F1, F2) etc. on the surface of the goods to be cut, if necessary also those covering a large area, whereby after being produced in a CAD system or similar the patterns are stored as outlines in an arithmetic processing unit (1) from where they can be called up, can be positioned on the goods to be cut by means of a control unit (5) and whereby the final positioning of the patterns is sent to the cutting device (C) via an electrical command, characterized by the following procedure steps:
i. patterns are selected from the memory of the arithmetic processing unit via a control unit which can be operated by an operator located adjacent to the work surface,
ii. the outlines of the patterns selected are projected by means of at least one laser beam on at least one arbitrary section and at any size directly on a work surface with the subsequent selection of certain outlines of parts of the patterns selected and optimum layout of the same taking place directly at and on the goods to be cut by the operator positioning the pattern projected full size by means of laser projection and, after having optimized the position of the outlines and markings on the goods to be cut, setting up a cutting order at full size for the cutting device and
triggering the cutting operation via the operator's control unit,
whereby all steps in the processing of the goods to be cut are carried out directly by the operator and the goods to be cut are not moved until completion of the cutting operation.

2. Method according to claim 1, characterized in that apart from being carried out at full size on the goods to be cut, the laser projection of the outlines of the patterns is also carried out at a reduced size on a control area on the work surface.

3. Method according to claim 1 and 2, characterized in that the diverse laser projections are carried out simultaneously.

4. Method according to claim i to 3, characterized in that the outlines of different patterns or groups of patterns are shown in different colours.

5. Apparatus for carrying out the method according to claim 1 to 4, comprising a computer (1) with its memory unit, a work table (AT) with goods to be cut (6) placed upon it, at least one keyboard for a cutting device (C) and the necessary electrical connections (3a, 3b), characterized in that for exchanging data the computer (1) is connected electrically to a movable laser beam unit (2), a control area (4) on the work surface (AF) of the work table (AT) and a control unit (5) for the operator as well as the cutting device (C), whereby the laser unit (2) projects the outlines of the patterns to be cut (T1, T2) at full size on the goods to be cut (6) by means of the laser beam (LS1) and also at a reduced size on the control area (4) by means of an additional laser beam (LS2).

6. Apparatus according to claim 5, characterized in that the control area (4) is located on the work table (AT) and is connected electrically to the laser beam unit (2) and the computer (1).

7. Apparatus according to claim 5 and 6, characterized in that a portable control unit (5) is provided which is connected electrically to the laser beam unit (2) and the computer (1).

8. Apparatus according to claim 5 to 7, characterized in that the connections (3a, 3b) between the individual components of the apparatus consist of electrical cables, fibre optic cables, optoelectric and/or radio links.

## Revendications

1. Procédé d'optimisation du traitement de matières à découper (6), telles que textiles, cuirs, tissus industriels ou similaires, notamment pour l'agencement de patrons (T1, T2) en fonction de défauts éventuels (F1, F2), etc. à la surface de la matière à découper (qui peut, le cas échéant, être de très grande dimension) avant le découpage automatique, les patrons étant, après création dans un système de CAO ou similaire, mémorisés sous forme de contours dans une unité de calcul (1) de façon à pouvoir être appelés ultérieurement, positionnés par l'intermédiaire d'un dispositif de commande (5) sur la matière à découper, leur position définitive étant transmise au dispositif de coupe (C) par un signal électrique. Ce procédé d'optimisation est caractérisé par les différentes étapes ci-après :
i.) Sélection de patrons dans la mémoire de l'unité de calcul au moyen d'un dispositif de commande piloté par un opérateur se tenant devant la surface de travail
ii.) Représentation directe des contours des patrons sélectionnés à la taille désirée en au moins un quelconque point d'une surface de travail au moyen d'au moins un rayon laser avec sélection consécutive de contours déterminés d'éléments des patrons sélectionnés et agencement optimal de ceux-ci par l'opérateur directement sur la pièce à découper, en positionnant les patrons par représentation laser de ceux-ci en grandeur nature et, après optimisation de la position des contours et marquages sur la matière à découper, configuration d'un programme de découpage en grandeur nature à l'intention du dispositif de découpage et
déclenchement du processus de découpage au moyen d'un dispositif de commande piloté par l'opérateur,
toutes les opérations de traitement de la matière à découper étant directement réalisées par l'opérateur et la matière à découper n'étant pas déplacée jusqu'à la fin du découpage.

2. procédé selon la revendication 1, caractérisé par le fait que la représentation laser des contours des patrons est projetée non seulement en grandeur nature sur la matière à découper, mais également en réduction sur le panneau de commande de la surface de travail

3. Procédé selon les revendications 1 et 2, caractérisé par le fait que les différentes représentations laser sont projetees simultanément

4. Procédé selon les revendications i à 3, caractérisé par le fait que les contours des différents patrons ou groupes de patrons sont représentés en différentes couleurs

5. Dispositif pour la mise en oeuvre du procédé selon les revendications 1 à 4, comprenant un ordinateur (1) avec son unité de mémoire, une table de travail (AT) supportant la matière à découper (6), au moins un clavier, un dispositif de découpage (C) et les raccordements électriques nécessaires (3a, 3b), caractérisé par le fait qu'en vue des échanges de données, l'ordinateur (1) est relié électriquement à un équipement laser mobile (2), un panneau de commande (4) prévu sur la surface de travail (AF) de la table de travail (AT) et un dispositif de commande (5) destiné à l'opérateur ainsi qu'au dispositif de découpage, le dispositif laser (2) assurant tant une représentation grandeur nature des contours à découper des patrons (T1, T2) sur la matière à découper (6) par l'intermédiaire du rayon laser émis (LS1) qu'une représentation en format réduit sur le panneau de commande (4) par l'intermédiaire d'un rayon laser supplémentaire (LS2).

6. Dispositif selon la revendication 5, caractérisé par le fait que le panneau de commande (4) est placé sur la table de travail (AT) et relié électriquement au dispositif laser (2) et à l'ordinateur (1)..

7. Dispositif selon les revendications 5 et 6, caractérisé par le fait qu'il est équipé d'un dispositif de commande portatif (5) relié électriquement au dispositif laser (2) et à l'ordinateur (1).

8. Dispositif selon les revendications 5 à 7, caractérisé par le fait que le raccordement (3a, 3b) de ses différents composants est réalisé au moyen de câbles électriques, fibres optiques, guides optoélectroniques et/ou liaisons radio.
